# EUROPÄISCHE PATENTANMELDUNG

(11) **EP 1 396 915 A1**
(43) Veröffentlichungstag der Anmeldung: **10.03.2004**
(21) Anmeldenummer: 02450196.7
(22) Anmeldetag: 03.09.2002
(51) Int. Cl.: H02G 1/12

(54) **Abisolieren von Flachleitern**

(71) Anmelder: I & T Flachleiter Produktions-Ges.m.b.h., 7011 Siegendorf (AT)
(72) Erfinder: Dietrich, Jörn, 71296 Heimshelm (DE)
(74) Vertreter: Patentanwälte BARGER, PISO & PARTNER

(57) **Zusammenfassung**

Die Erfindung betrifft ein Verfahren zum Abisolieren von Leiterbahnen (2) extrudierter bzw. laminierter Flachleiter (1), sogenannten FFCs, unter Verwendung von Laserstrahlen (4).

Die Erfindung ist dadurch gekennzeichnet, dass in einem ersten Schritt ein Strahl eines CO₂-Lasers oder eines Nd:YAG-Lasers (4) und in einem zweiten Schritt ein Excimer-Laser oder ein mit vervielfachter Frequenz betriebener Nd:YAG-Laser verwendet wird, dass der CO₂-Laser bzw. Nd:YAG-Laser mit solcher Intensität und über solche Dauer auf das Extrudat (3) des FFC (1) einwirken gelassen wird, dass im Bereich der Leiterbahn(en) (2) des FFC noch eine Extrudatschichte bzw. Laminatschichte (6) mit einer Dicke von einigen Mikrometern verbleibt, die im zweiten Schritt durch den Strahl des Excimer-Lasers bzw. des mit vervielfachter Frequenz betriebenen Nd:YAG-Laser abgetragen wird.

## Beschreibung

Die Erfindung betrifft das Abisolieren von Flachleitern. Flachleiter, sogenannte FFCs, werden in letzter Zeit zunehmend verwendet, da sie im Gegensatz zu Rundleitern durch Automaten manipuliert werden können und daher insbesondere bei der Herstellung von Kabelbäumen für Kraftfahrzeuge, aber auch bei anderen industriellen Anwendungen, günstiger sind als Rundleiter.

Prinzipiell sind zwei Arten von FFCs zu unterscheiden, die laminierten und die extrudierten. Die laminierten FFCs bestehen aus elektrischen Leiterbahnen, zumeist aus Kupfer, die parallel zueinander zwischen zwei Folien geklebt sind und so nach außen und untereinander isoliert sind. Unter Umständen können die Folien mehrlagig ausgebildet sein oder es können mehr als zwei Folien verwendet werden.

Die extrudierten FFCs bestehen aus Leiterbahnen, die durch spezielle Extrusionsmaschinen geführt werden, wobei ein elektrisch isolierendes Extrudat um sie herum gegossen bzw. gespritzt wird, so dass die einzelnen Leiterbahnen durch das Extrudat nach außen und gegeneinander isoliert sind. Die vorliegende Erfindung betrifft beide Arten von FFCs.

In beiden Fällen können die eigentlichen Leiterbahnen rund, oval, rechteckig oder mit anderer Querschnittsform versehen sein.

Die Verwendung von FFCs, welcher Art auch immer, ermöglicht es, Abzweigungen so herzustellen, dass in beiden FFCs an den gewünschten Stellen das Isolationsmaterial entfernt wird, man sagt: "Es werden Fenster geschaffen", dass die FFCs passend mit ihren Fenstern übereinandergelegt werden, dass die nun freiliegenden und in engem Abstand voneinander befindlichen bzw. einander bereits berührenden Leiterbahnen miteinander verlötet oder verschweißt werden und dass sodann, zumeist durch Klebemassen, Klebfilme od.dgl., die Isolierung nach außen und zwischen den Leiterbahnen wieder gesichert wird.

Darüber hinaus ist es auch notwendig, im Endbereich jedes FFCs Isolierungen vorzunehmen, um Stecker, Kontakte od.dgl. aufbringen zu können.

Es hat sich als vorteilhaft, ja sogar als notwendig erwiesen, auch im erstgenannten Falle der Fensterbildung die Leiterbahnen beidseits freizulegen, da nur dann eine mechanisch stabile und elektrisch zuverlässige Verbindung zwischen den übereinander liegenden Leiterbahnen geschaffen werden kann.

Aus all dem Gesagten geht hervor, dass die Notwendigkeit besteht, FFCs mit Fenstern zu versehen, wobei die Geometrie dieser Fenster möglichst genau der gewünschten Geometrie entsprechen soll, wobei die Entfernung des isolierenden Materials möglichst vollständig erfolgen soll und wobei insbesondere nach der Schaffung des Fensters die Leiterbahnen in einem Zustand und hier insbesondere Oberflächenzustand vorliegen müssen, der eine Verbindung übereinander liegender Leiterbahnen ohne aufwendige Vorbereitung gestattet.

Die bisher verwendeten Verfahren arbeiteten mechanisch und bestehen aus einer Art Kombination von Stanztechnik und Abschälvorgang im bereits bis zur Leiterbahn ausgestanzten Bereich. Zufolge der unvermeidlichen Herstellungstoleranzen, insbesondere bei den extrudierten FFCs, bei denen ja die Leiterbahnen im erstarrenden Extrudat ohne eigene Führung und Justierung "schwimmen", bis das Extrudat erstarrt ist, führt dies zu Problemen mit Extrudatresten, die an den Leiterbahnen verbleiben und zu Beschädigungen der Leiterbahnen an den Stellen, an denen die Leiterbahn exzentrisch im Extrudat vorliegt.

Es wurde bereits versucht, das Extrudat mittels Lasers zu entfernen, doch führte dies zu Oberflächeneigenschaften der Leiterbahnen, die eine nachfolgende aufwendige Behandlung notwendig machten und so für Stückzahlen und Taktraten, die über einen Probebetrieb hinausgehen, unbrauchbar waren.

Man darf dabei nicht vergessen, dass eine derartige Behandlung mit flüssigen Chemikalien eine Zwischenstation im Produktionsablauf notwendig macht, bei der unter einer Abzugshaube diese Chemikalien aufgebracht und nach ihrem Einwirken wieder entfernt werden, dass es notwendig ist, die entsprechenden Stellen der durch die Station geführten FFCs zu trocknen und erneut zu überprüfen und dass die verwendeten Chemikalien nicht nur bereit gestellt, sondern wieder aufbereitet und zu guter Letzt entsorgt werden müssen. Dazu kommt noch, dass es prinzipiell unangenehm ist, mit derartigen Chemikalien in einem Produktionsprozeß zwischen mechanischen, elektronischen und laserbestückten Bearbeitungsstationen zu hantieren.

Die Erfindung zielt darauf ab, ein Verfahren anzugeben, dass die genannten Nachteile nicht aufweist, sondern die Herstellung von Fenstern in FFCs auf zuverlässige und an das gesamte Herstellungsverfahren angepaßte Weise zu erreichen, wobei auf eine nachfolgende Behandlung der Oberflächen der Leiterbahnen verzichtet werden kann und die mit den Fenstern versehenen FFCs entweder unmittelbar weiter verarbeitet werden oder einer Station zugeführt werden, in denen die freiliegenden Leiterbahnabschnitte verzinnt werden, um auch bei nachfolgender längerer Lagerung eine elektrisch einwandfreie leitende und zuverlässig zu verlötende bzw. zu verschweißende Oberfläche zu schaffen, worauf die so fertiggestellten FFCs auf beliebige Weise gelagert werden können.

Erfindungsgemäß werden diese Ziele dadurch erreicht, dass die Schaffung der Fenster durch aufeinanderfolgende Verwendung eines CO₂-Lasers und eines Excimerlasers hergestellt werden. Dabei ist vorgesehen, den CO₂-Laser mit solcher Intensität und einer solchen Einsatzdauer auf den FFC einwirken zu lassen, dass im Bereich der Leiterbahnen noch eine Extrudatschichte mit einer Dicke von wenigen Mikrometern, beispielsweise zwischen 2 und 5 Mikrometer, verbleibt. Die dazu notwendigen Einstellungen können durch einige wenige Versuche in Abhängigkeit vom verwendeten Extrudat und dem zur Verfügung stehenden Laser leicht festgestellt werden. Die Restschichte an Extrudat wird mit dem Excimer-Laser entfernt, dieser Teilschritt hinterläßt überraschenderweise bereits eine Oberfläche der Leiterbahnen (Kupfer), die zum direkten Verschweißen bzw. Verlöten oder Verzinnen bestens geeignet ist.

Auf diese Weise werden tatsächlich die Probleme der vorbekannten Verfahren vermieden und die erfindungsgemäßen Ziele erreicht. Die Erfindung wird im folgenden an Hand einer rein schematischen Darstellung noch näher erläutert. Dabei zeigt die
Fig. 1 den ersten und die
Fig. 2 den zweiten Verfahrensschritt.

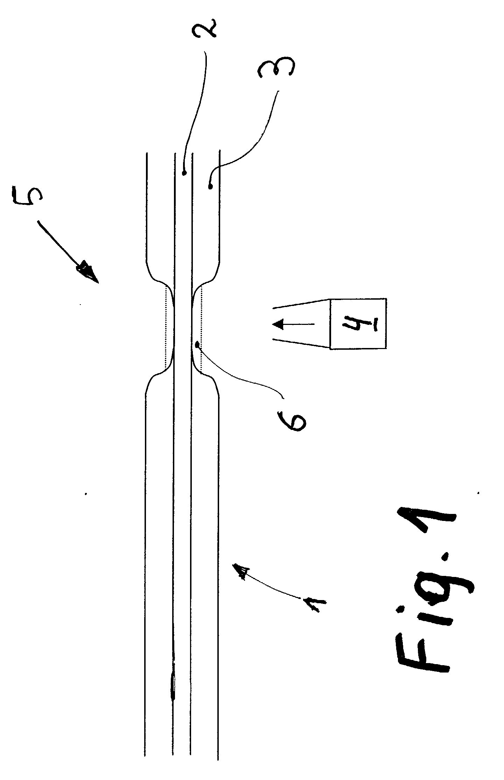

Fig. 1 zeigt einen extrudierten FFC 1 rein schematisch im Schnitt entlang einer Leiterbahn 2, wobei auf Schraffuren aus Gründen der Übersichtlichkeit verzichtet wurde. Der FFC 1 besteht im wesentlichen aus mehreren Leiterbahnen 2, von denen aufgrund der Schnittführung nur eine sichtbar ist, und dem Extrudatmantel 3. Rein schematisch ist ein CO₂-Laser 4 dargestellt, der ein Fenster 5 bereits im wesentlichen geschaffen hat, wobei in einem vorhergegangenen Schritt symmetrisch zum Leiter 2 der obere Teil des Fensters 5 bereits geschaffen wurde. Punktiert ist ein Bereich 6 angezeigt, der rein schematisch und stark überhöht die verbleibende Extrudatschichte 6 auf der Leiterbahn 2 andeutet.

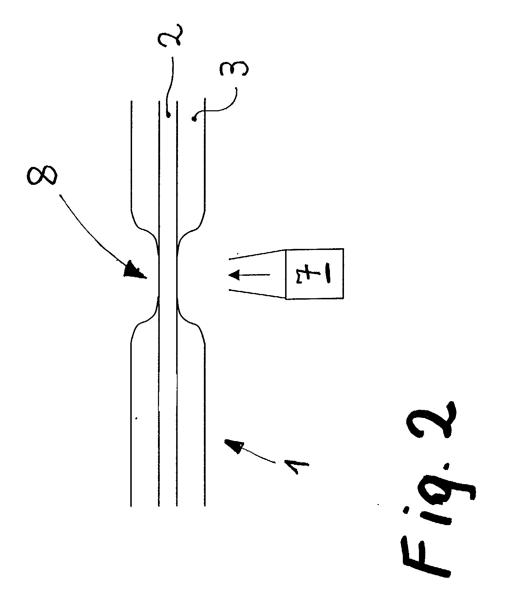

Die Fig. 2 zeigt den nächsten Schritt, ein Excimer-Laser 7 hat die Schicht 6 bereits entfernt, aus dem Rohfenster 5 wurde das endgültige Fenster 8, in dem die Leiterbahnen 2 blank und gebrauchsfertig vorliegen. Auch in Fig. 2 ist die Situation dargestellt, die sich ergibt, wenn die zweite der beiden Seiten des FFC bearbeitet werden.

Die Erfindung ist nicht auf das dargestellte Ausführungsbeispiel beschränkt, sondern kann verschiedentlich abgewandelt werden. So ist es möglich, zwei Laser vorzusehen, von denen sich der eine oberhalb, der andere unterhalb des FFC befindet und diese abwechselnd zum Einsatz zu bringen, es können der CO₂-Laser 4 und der Excimer-Laser 7 in derselben Station abwechselnd zum Einsatz kommen, um dazwischen den FFC nicht bewegen zu müssen und so zu größeren Genauigkeiten der Ränder der Bearbeitungsgebiete zu kommen u.dgl. mehr.

Es ist auch nicht unbedingt notwendig, einen CO₂-Laser und einen Excimer-Laser zu verwenden, es ist möglich, statt des CO₂-Laser einen Nd: YAG - Laser (Wellenlängenbereich 1 Mikrometer bis 11 Mikrometer) zu verwenden, statt des Excimer-Laser einen Frequenz verfvielfachten Nd: YAG - Laser (Wellenlängenbereich 150 nm bis 1 Mikrometer). Wesentlich ist aber, dass mit dem CO₂-Laser bzw. seinem Äquivalent ein Fenster geschaffen wird, bei dem auf den Leiterbahnen noch Extrudat in der mittleren Dicke zwischen 2 und 5 Mikrometer verbleibt und dass dieses Extrudat sodann mit dem Excimer-Laser oder einem Äquivalenten entfernt wird.

## Patentansprüche

1. Verfahren zum Abisolieren von Leiterbahnen (2) extrudierter bzw. laminierter Flachleiter, sogenannten FFCs (1), unter Verwendung von Laserstrahlen, **dadurch gekennzeichnet, dass** in einem ersten Schritt ein Strahl eines CO₂-Lasers oder eines Nd:YAG-Lasers (4) und in einem zweiten Schritt ein Excimer-Laser oder ein mit vervielfachter Frequenz betriebener Nd:YAG-Laser (7) verwendet wird, dass der CO₂-Laser bzw. Nd:YAG-Laser mit solcher Intensität und über solche Dauer auf das Extrudat (3) des FFC (1) einwirken gelassen wird, dass im Bereich der Leiterbahn(en) des FFC noch eine Extrudatschichte bzw. Laminatschichte (6) mit einer Dicke von einigen Mikrometern verbleibt, die im zweiten Schritt durch den Strahl des Excimer-Lasers bzw. des mit vervielfachter Frequenz betriebenen Nd:YAG-Laser (7) abgetragen wird.

2. Verfahren nach Anspruch 1, **dadurch gekennzeichnet, daß** die am Ende des ersten Behandlungsschrittes noch auf den Leiterbahnen (2) verbleibende Extrudatschichte bzw. Laminatschichte (6) eine Dicke zwischen 2 und 5 Mikrometern aufweist.
